# EUROPEAN PATENT APPLICATION

(11) **EP 2 439 690 A1**
(43) Date of publication of application: **11.04.2012**
(21) Application number: 11183949.4
(22) Date of filing: 05.10.2011
(51) Int. Cl.: G06Q 10/00

(54) **Method for inspection of performed cleaning**

(30) Priority: 11.10.2010 SE 1051060
(71) Applicant: Seward, Preben, 191 35 Sollentuna (SE)
(72) Inventor: Seward, Preben, 191 35 Sollentuna (SE)
(74) Representative: Lettström, Richard Wilhelm

(57) **Abstract**

The present invention relates to a method for the inspection of cleaning performed, which method comprises the steps that specific data regarding the institution to be inspected is registered in a hand-hold computer (2) carried by an inspector, which computer via the Internet (4) is connected to a central computer (2), that before each inspection the number of rooms to be inspected with the institution is registered in the hand-hold computer, that in said hand-hold computer it is registered which specific rooms to inspect, that the objects to be inspected in the room in question are selected and indicated in the hand-hold computer, that at least the objects selected are inspected, that inspection data is registered in the hand-hold computer, and is transmitted to the first database in the central computer, that, when all rooms have been inspected, judgements about the separate objects are transmitted to the second database (21) in the central computer and that data in this second database is processed to a report by the central computer.

## Description

The present invention refers to a method for inspection of performed cleaning according to the preamble of claim 1.

Today, the cleaning with large institutions or companies is exclusively attended to by a hired service company, i.e. either by a large cleaning firm or by a so called facility service firm, which takes care of most services with the company which do not refer to the regular core business. Therefore, a problem arises at the inspection that, as in this case, the cleaning has been carried out according to an agreement. For this purpose, there are a number of different methods and systems on the market. All these systems have the purpose to inspect if the cleaning has been carried out properly and that a report is sent as quickly as possible to the parties concerned regarding the shortcomings discovered at the inspection. This is made in order, in as a quick and smooth manner as possible, to be able to correct the shortcomings discovered.

These systems and methods are necessary to keep the cleaning at as a good level as possible. Today's systems and methods do not in a cost efficient manner settle what this level actually implies and if it in any way corresponds to that agreed upon by the parties in a mutual agreement. The agreement between the company and the cleaning firm often contains a penalty clause which cannot be used as there is no system which may measure the difference between the cleaning quality agreed upon and the cleaning quality performed. The cleaning implies essential costs for large companies. In Sweden, the costs today are between SEK 500 and SEK 200 per employee, depending on the personnel intensity and the size of the company. It is quite natural that the companies want to get their cleaning costs reduced if they do not correspond to the agreement.

US 2003/0036915 describes a method and a computer system for the guarantee of quality concerning the cleaning of institutions or maintenance of details or institutions, according to which method predetermined places are inspected and the quality of all separate places is reported to a server which convert all test values to a final report. This method is extremely costly, as it implies that after each cleaning a very large number of places is inspected, which inspections are repeated after each cleaning.

The object of the present invention is to provide a method for the inspection of the cleaning performed, at which method the above mentioned drawbacks have been removed.

The object is achieved by a method having the characterizing features of claim 1.

The sub-claims describe preferred embodiments.

More particularly, the method of the invention relates to comparing the cleaning quality agreed upon with the quality which has in practice been performed in order to get a fair reduction of the price agreed upon. Consequently, the method of the invention for inspection of performed cleaning implies a system which compares the cleaning performed with the cleaning agreed upon.

The invention will be described more in detail below with reference to the drawings, which show a preferred embodiment.
- Fig. 1: shows a system for the realization of a method according to the invention for the inspection of performed cleaning.
- Fig. 2: shows a flowchart of the method of the invention.

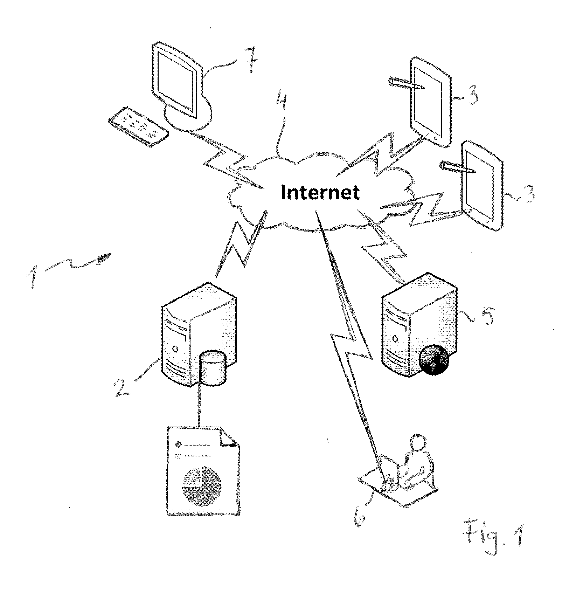

Fig. 1 shows a system 1 for the realization of a method according to the invention for the inspection of performed cleaning. This system 1 compares that which has been agreed upon between a company and a cleaning firm with that which has actually been performed. Normally, the system is owned by the company. The difference is presented in percentage of the agreement. The level of cleaning agreed upon is always 100 %. If the cleaning quality performed during a month on average is max 80 % (if there is such a clause in the agreement), the company is entitled to a reduction of 20 % of the cleaning cost of the month, for instance.

The equipment for this system consists of a central computer 2, to which one or more hand-hold computers 3 are connected. All information between each hand-hold computer 3 and the central computer 2 takes place via the Internet 4 and its web server 5. Each result of the inspection performed is presented directly on a terminal 6 via the Internet 4, which terminal is accessible to the company and preferably protected by a password.

The configuration of the meaning of the agreement takes places via a terminal 7 by means of data from the company. The information needed in the system, except personnel and company data for the company and the cleaning firm, is all information about premises and predetermined objects in the premises which are included in the agreement between the company and the cleaning firm.

Data is entered into the terminal 7, which data controls the inspection and is transferred to the main computer. This specific data may also be fetched by the hand-hold computers 3 via the Internet 4.

The data mentioned above is information in a hierarchy, which from below begins with the objects to be cleaned. An object is e.g. a table, a telephone, a strip, a television, a washbasin, a desk, a cloakroom, a sickbed, a tool cabinet, a pulpit, etc. Everything which is conceivable to clean is an object. An object is the smallest unit of the system. These objects are found in a room, which is the next step of the hierarchy. A room is an office, a ward, a conference room, an elevator, a staircase, a storeroom, a garage, a hotel room, a cabin, etc. Thus, a room is a space to be cleaned according to the agreement. In the system, the rooms may be arranged in groups, which in turn are arranged in larger groups until all rooms have been collected to a large main group. The reason for this is that the statistics in the reporting could be presented in a manner desired by the company, e.g. statistics for a special part of a building, statistics per cleaner, statistics for lavatories only, statistics for the entire company, etc. The company may get the statistics exactly in the desired way.

A new company is entered into the terminal 7 with the relevant data of the company, such as company name, company address, invoice address, telephone and contact, etc. The same is valid for the data regarding the cleaning firm.

Each room, which according to the agreement is to be cleaned with the company, is entered into the main computer 2 of the system with data about kind of room and with the identity of the room with the company. Then, all the objects are entered into the room which are to be cleaned in just this room. When all rooms and the objects included therein have been entered into the main computer 2, they are transferred to the hand-hold computer 3. With a company having e.g. 1,000 rooms to clean, there are about 20,000 to 25,000 object data in the hand-hold computer 3. In order to facilitate the creation of rooms with their obj ects, hundreds of rooms of different kinds with belonging objects are already programmed into the system.

To make it possible for the hand-hold computer 3 to know which room one enters at an inspection, the company identity of the room must be connected to an identity known by the hand-hold computer 3. This operation is manually executed when the first time one registers all rooms by means of the hand-hold computer 3. Before the system is used, a label is put up at each entrance to a room, which label shows a room identity which the hand-hold computer may read mechanically or which one enters into the hand-hold computer via its keyboard. At the same time one opens the room in the hand-hold computer, reads the label or the bar-code with the code reader of the hand-hold computer and couples in this way the room together with the label of the bar-code. In this way, the company identity of the room is connected to an identity which can be read by the hand-hold computer 3. At the same time it is controlled if the objects entered for the room coincide with the ones which actually are there. When all rooms have been connected to the computer, the system of the company has been established. The remaining thing to do is in the computer to establish the level agreed upon in the agreement between the company and the cleaning firm.

This level is entered into the system by the company and the cleaning firm at a joint control of a predetermined number of objects. One determines this number oneself before one begins the inspection. Besides the number of objects one wants to inspect one shall write the name of the person making the inspection. The computer keeps count of when the inspection is made and how long time it takes.

The representatives of the company and the cleaning firm choose themselves manually or through a random generator at random which room to inspect. The hand-hold computer selects at random by means of a random generator the number of obj ects and which objects to be inspected. The number of objects may be altered but in the hand-hold computer between 1 and 5 objects for each room may have been preset, which objects are preferably compulsory predetermined. The hand-hold computer keeps count of how many objects which remain to be inspected. As the inspections are quickly performed, the number of objects to inspect should not be below 200 each time one inspects a company.

The objects to inspect appear on the screen of the hand-hold computer. After each object there are two checkboxes, where the inspector ticks off how one judges the cleanliness of the object. At a preferred embodiment, there are only two options. "Approved" or "Not approved". Of course, there may be other criterions of decision within the frame of the method according to the invention. It is very important that the representatives of the company and the clearing firm agree at the judgement. When a room is ready, the inspector selects a new room and makes the same inspection. As mentioned above, the inspector normally selects the rooms himself, while the hand-hold computer selects the objects in each room chosen. In the agreement it may be indicated that a predetermined number of rooms is to be inspected during each inspection round.

When the inspection for the judgement of the cleaning level in the system has been performed by the inspector, the inspector states this through a button press or through any other known manner on the hand-hold computer 3 and the result is automatically sent from the hand-hold computer to the central computer 2 for processing. The result may then be transmitted to a web page which the company has access to through its computer or terminal 6 so that the company may open its reports protected by passwords. For instance, the results may be presented with times and which inspector/s which has/have taken part at the inspection. The number of objects approved may be presented in a bar chart. The chart consists of e.g. 14 double bars where the first double bar represents the current inspection. The subsequent twelve pairs of bars represent the months on a rolling schedule. The present month always stays first. The last one and here the 14th bar-pair is an annual average of the last 12 months.

The first bar of the bar-pairs show the inspections made by the company and the cleaning firm together. The second bar of the two shows the inspections made by the cleaning firm itself.

The bars show the number of objects approved in percentage of the objects inspected. A bar shall according to the agreement between the representatives of the company and the cleaning firm contain 100% objects approved.

The objects which have not been approved are shown in the report with data about where these obj ects were placed and which obj ects they were.

The reports which are generated in a report generator and based on all material reported, historically as actually, may therefore be designed entirely according to the requirements of the company. Inspections where both the company and the cleaning firm take part need not be performed more than a couple of times yearly; for natural reasons somewhat more frequent at the beginning when the system or the agreement is new. The inspections made by the cleaning firm are in principal to be made each time the representative of the cleaning firm visits the company, i.e. at least one time a week.

There are great differences between the method of the invention the system previously known according to US 2003/0036915, at which inspection takes place if the cleaning of a room has been properly performed and where it is rapidly reported where the shortcomings are so that measures may quickly be taken in order to rectify them. In that case, this previously known system does not differ from a great number of other similar known systems. The difference between this previously known system and the other similar systems is in fact only that one here in advance has entered what is to be inspected in the rooms as compared to the other system where it is only shortcomings which are entered afterwards. This implies that the system according to US 2003/ 0036915 is a somewhat quicker system.

The purpose of the method of the invention is not to inspect the cleaning as a whole but the level of the cleaning in comparison with the level agreed upon. The entire system is based on the random selection made by the hand-hold computer. It is an additional advantage that one in the system also may report what is wrong and also make notes which one considers important, but this is only an addition which is not included in the very basic idea of the present invention.

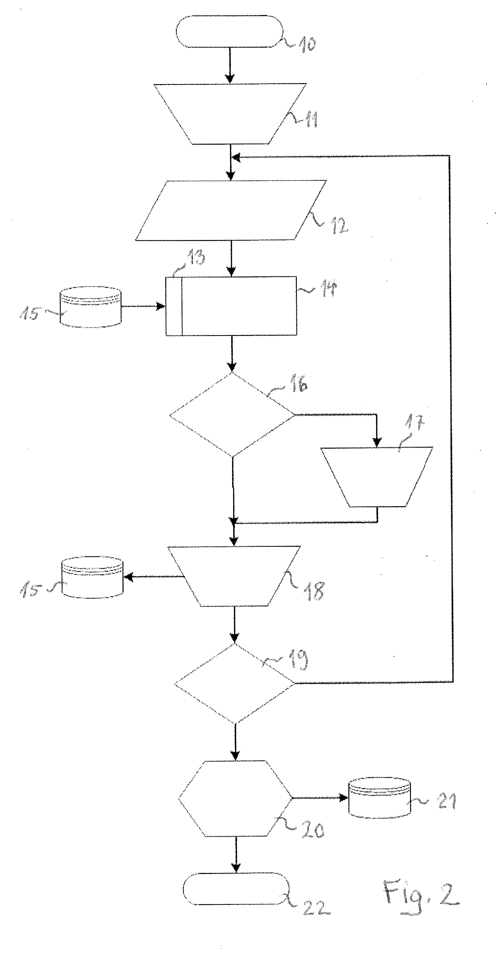

Here, a short description of the function of the system will follow with reference to the flowchart according to Fig. 2.

The inspection starts at 10, and at 11 the inspector selects inspection data for the specific inspection, as mentioned above, such as how many rooms to inspect. At a further development, the selection of rooms takes place through a random generator.

Then, the inspector goes to the first indicated inspection at 12 and registers, by means of the hand-hold computer, the room by reading a bar code or a RFID chip or registers the room in any other way known per se, such as also manually by entering the number of the room direct into the hand-hold computer 3.

Then, the random generator 13 automatically selects at 14 the objects to be inspected in this room and fetches this data from the database 15 in the central computer 2. This data may already have been entered into the hand-hold computer before the inspection round is started, as the reception via the Internet 4 is not always optimal.

At 16 it is registered via the hand-hold computer 3 if any object in the room in question is missing, i.e. the difference between the real number of objects and the registered number. If objects are missing, this is registered at 17, otherwise one passes directly to the inspection of the objects, which takes place at 18. The objects are inspected and data about the cleanliness of the objects is transmitted to the database in the central computer 2 for further processing.

Through the hand-hold computer an indication is obtained at 19 if the inspection is completed, i.e. that the number of rooms selected has been inspected, and if this is not the case, an indication is given about the next room and the inspection starts again in this room at 12.

Finally, when all rooms have been inspected, a transmission takes place at 20 of all data inspected to a database 21 in the central computer 2 for the presentation to the cleaning firm and the company.

The inspection is then completed at 22.

Modifications of the method of the invention may be made within the frame of the enclosed claims.

## Claims

1. A method for level inspection of cleaning performed, wherein specific data regarding the institution to be inspected is registered in a hand-hold computer (3) carried by an inspector, which computer via the Internet (4) is connected to a central computer (2), which processes said data for the determination of a level concerning an inspection performed, wherein all objects included in the cleaning have in advance been registered in said central computer (2) for said institution, and are arranged to be transmitted to said hand-hold computer (3), **characterized in that** an agreement level agreed upon regarding said institution has been registered in said central computer (2) and that a predetermined limited number of said objects is inspected for the determination of said level and that said level is presented in relation to said agreement level, preferably in percentage.

2. A method according to claim 1, **characterized in that** for each institution all rooms included in the cleaning have been registered in said central computer (2), wherein each room has an own room identity and that for each room the objects included in the room have been registered.

3. A method according to claim 2, **characterized in that** a predetermined number of objects or rooms are inspected for the determination of said level, wherein the number of objects preferably must not be below a predetermined minimum level.

4. A method according to any of claims 1 to 3, **characterized in that** the objects to be inspected in each room are selected by a random generator (13) and preferably that said random generator (13) is also used to select a room.

5. A method according to claim 3, **characterized in that** said hand-hold computer (3) knows how many object and/or rooms still to inspect.

6. A method according to claim 4, **characterized in that** each room is provided with one room identification device in or at the room.

7. A method according to claim 5, **characterized in that** said room identification device is an identity that may be read by said hand-hold computer (3), preferably in the form of a bar code and/or RFID tag.
